# EUROPÄISCHE PATENTANMELDUNG

(11) **EP 4 060 211 A1**
(43) Veröffentlichungstag der Anmeldung: **21.09.2022**
(21) Anmeldenummer: 21163421.7
(22) Anmeldetag: 18.03.2021
(51) Int. Cl.: F16K 17/04

(54) **ÜBERDRUCKVENTIL**

(71) Anmelder: AVS, Ingenieur J.C. Römer GmbH, 94481 Grafenau (DE)
(72) Erfinder: Haselwarter, Wolfgang, 94154 Neukirchen vorm Wald (DE)
(74) Vertreter: Wolf, Gerhard

(57) **Zusammenfassung**

Die Erfindung betrifft ein Überdruckventil umfassend ein erstes Ventilelement (2), das einen Ventilsitz (2.1) ausbildet und ein zweites Ventilelement (3), das relativ zum ersten Ventilelement (2) bewegbar ist, wobei in dem Überdruckventil ein Fluidkanal (4) mit einer Fließrichtung (FR) ausgebildet ist, wobei das zweite Ventilelement (3) in Fließrichtung (FR) verschiebbar ist, wobei das zweite Ventilelement (3) federbelastet gegen den am ersten Ventilelement (2) ausgebildeten Ventilsitz (2.1) anpressbar ist, um das Überdruckventil zu schließen und bei Übersteigen eines Öffnungsdrucks in Fließrichtung (FR) von dem Ventilsitz (2.1) abhebbar ist und wobei an dem zweiten Ventilelement (3) ein Dichteelement (5) vorgesehen ist. Die Erfindung zeichnet sich dadurch aus, dass das Dichtelement (5) ein flächiges Element ist, das einen Mittenbereich (5.1) und einen Randbereich (5.2) aufweist, dass das Dichtelement (5) im Randbereich (5.2) eine größere, in Fließrichtung (FR) gemessene Dicke (d) aufweist als zumindest der an den Randbereich (5.2) angrenzende äußere Abschnitt des Mittenbereichs (5.1), dass der Randbereich (5.2) des Dichtelements (5) an der dem ersten Ventilelement (2) zugewandten Seite zumindest gegenüber dem äußeren Abschnitt des Mittenbereichs (5.1) vorsteht und im geschlossenen Zustand des Überdruckventils gegenüber dem ersten Ventilelement (2) anliegt.

## Beschreibung

Die Erfindung betrifft ein Überdruckventil, insbesondere für fluidführende Anwendungen im Lebensmittelbereich, beispielsweise für Getränkeautomaten, Kaffeemaschinen etc. Das Überdruckventil kann insbesondere als Sicherheitsventil ausgebildet sein.

Überdruckventile sind grundsätzlich bekannt. Sie weisen einen federbelasteten Ventilstößel auf, der in einem Ventilgehäuse verschiebbar geführt ist. Das Überdruckventil ist im Normalbetrieb geschlossen, d.h. ein am Einlass anstehendes Fluid kann nicht durch das Überdruckventil hindurchfließen. Für den Fall, dass der Druck des am Einlass anliegenden Fluids einen Druckschwellwert übersteigt, wird der Ventilstößel entgegen der Federkraft in eine Öffnungsposition bewegt, so dass das Fluid das Überdruckventil durchströmen kann.

Ein wesentlicher Nachteil bekannter Überdruckventile besteht darin, dass diese häufig ein unspezifisches Öffnungsverhalten aufweisen. Beispielsweise kann eine irreversible Verformung eines Dichtelements dazu führen, dass sich der Druckschwellwert, ab dem das Überdruckventil öffnet, verschiebt bzw. dass der beim Öffnen entstehende Fluidfluss undefiniert ist.

Ausgehend hiervon ist es Aufgabe der Erfindung, ein Überdruckventil anzugeben, das eine präzise und wiederholgenaue Funktion aufweist und darüber hinaus eine hohe Dichtigkeit garantiert.

Die Aufgabe wird durch ein Überdruckventil mit den Merkmalen des unabhängigen Patentanspruchs 1 gelöst. Bevorzugte Ausführungsformen sind Gegenstand der Unteransprüche.

Gemäß einem Aspekt bezieht sich die Erfindung auf ein Überdruckventil. Das Überdruckventil umfasst ein erstes Ventilelement, das einen Ventilsitz ausbildet und ein zweites Ventilelement, das relativ zum ersten Ventilelement bewegbar ist. Das zweite Ventilelement ist vorzugsweise ein Ventilstößel. In dem Überdruckventil ist ein Fluidkanal ausgebildet, der gemäß einer Fließrichtung einen Einlass des Überdruckventils mit einem Auslass desselben verbindet. Das zweite Ventilelement ist in Fließrichtung verschiebbar, wobei das zweite Ventilelement federbelastet gegen den am ersten Ventilelement ausgebildeten Ventilsitz anpressbar ist, um das Überdruckventil zu schließen. Damit wird die Durchfließbarkeit des Fluidkanals unterbrochen. Bei Übersteigen eines Druckschwellwerts wird das zweite Ventilelement derart in Fließrichtung bewegt, dass dieses von dem Ventilsitz abgehoben und damit das Überdruckventil geöffnet wird. An dem zweiten Ventilelement ist ein Dichteelement vorgesehen, damit im geschlossenen Zustand kein Fluid durch das Überdruckventil fließen kann. Das Dichtelement ist ein flächiges Element, das einen Mittenbereich und einen Randbereich aufweist. Das Dichtelement weist im Randbereich eine größere, in Fließrichtung gemessene Dicke auf als zumindest der an den Randbereich angrenzende äußere Abschnitt des Mittenbereichs.
In anderen Worten ist damit der Mittenbereich des Dichtelements zumindest partiell randseitig dünner ausgebildet als der Randbereich des Dichtelements. So kann beispielsweise der Mittenbereich randseitig eine Ausnehmung oder Einkerbung aufweisen, die dazu führt, dass das Dichtelement im Randbereich dicker ist als im Bereich der Ausnehmung oder Einkerbung. In einem inneren Bereich kann der Mittenbereich des Dichtelements jedoch eine größere Materialstärke aufweisen, insbesondere auch partiell dicker als der Randbereich. So kann zentral im Mittenbereich beispielsweise eine hügelartig ausgebildete Erhöhung vorgesehen sein, die eine Leitwirkung des Fluids radial nach außen bewirkt. Der Randbereich des Dichtelements steht an der dem ersten Ventilelement zugewandten Seite gegenüber dem äußeren, randseitigen Abschnitt des Mittenbereichs vor und liegt im geschlossenen Zustand des Überdruckventils gegenüber dem ersten Ventilelement an.

Der technische Vorteil des Überdruckventils besteht darin, dass durch das höhenkonturierte Dichtelement ein sehr definiertes Öffnungsverhalten erreicht wird, das eine hohe Wiederholgenauigkeit in Bezug auf den Druckschwellwert, bei dem das Überdruckventil öffnet, bietet und darüber hinaus eine hohe Sicherheit gegen auftretende Undichtigkeiten bietet, da durch die flächige Ausbildung des Dichtelements ein Hinterfließen des Dichtelements und damit ein Herauslösen des Dichtelements aus dem zweiten Ventilelement verhindert wird. Zudem kann bei dem Überdruckventil vorteilhafterweise auf eine Verstellmechanik verzichtet werden, mittels der der Druckschwellwert, ab der das Ventil öffnen soll, einstellbar ist, da aufgrund des verwendeten Dichtelements das Öffnungsverhalten im Vorhinein sehr genau bestimmbar ist und der Druckschwellwert damit beispielsweise durch eine geeignet dimensionierte Feder eingestellt werden kann. Die zumindest randseitig dünnere Ausbildung des Mittenbereichs des Dichtelements hat den Vorteil, dass das Material des Randbereichs, das durch die Komprimierung des Dichtelements beim Anpressen an den Ventilsitz verlagert wird, radial nach innen ausweichen kann.

Gemäß einem Ausführungsbeispiel bildet das erste Ventilelement einen ringförmigen planaren Ventilsitz aus. Die in radialer Richtung gemessene Breite des ringförmigen Ventilsitzes ist zumindest so groß wie die in radialer Richtung gemessene Breite des Randbereichs des Dichtelements. Der Ventilsitz ist dabei vorzugsweise durch eine ringförmige Fläche gebildet, die senkrecht zur Fließrichtung bzw. zur Längsachse des Überdruckventils verläuft. Dadurch wird erreicht, dass der Randbereich des Dichtelements flächig gegenüber dem Ventilsitz anliegt und sich damit kein grabenartiger Abdruck des Ventilsitzes am Dichtelement bilden kann, wie das bei schmal ausgebildeten Ventilsitzen der Fall ist.

Gemäß einem Ausführungsbeispiel ist der Randbereich des Dichtelements ringförmig ausgebildet und weist an der dem Ventilsitz zugewandten Seite eine konvex gewölbte Dichtfläche auf. Vorzugsweise weist die konvex gewölbte Dichtfläche einen halbrunden oder im Wesentlichen halbrunden Querschnittsabschnitt auf. Dadurch ist der Randbereich an der dem Ventilsitz zugewandten Oberseite ähnlich einem Dichtring geformt. Dies birgt Vorteile hinsichtlich einer kontrollierten und reproduzierbaren Verformung bei geschlossenem Überdruckventil und einer wiederholgenauen Rückverformung beim Öffnen des Überdruckventils, was insgesamt zu einer präzisen und wiederholgenauen Funktion des Überdruckventils führt.

Abweichend von einer konvex gewölbten Dichtfläche bzw. dem halbrunden oder im Wesentlichen halbrunden Querschnittsabschnitt kann der Randbereich des Dichtelements auch eine davon abweichende Querschnittsform haben, beispielsweise eine keilförmige, trapezförmige oder quadratische Querschnittsform.

Gemäß einem Ausführungsbeispiel ist der Mittenbereich des Dichtelements als Dichtmembran ausgebildet ist und bildet zusammen mit dem Randbereich ein geschlossenes, einstückig ausgebildetes Dichtelement aus. Die Dichtmembran kann konturiert ausgebildet sein, beispielsweise im Zentrum eine Erhöhung aufweisen. Die Dichtmembran weist zumindest im äußeren, randseitigen Abschnitt, der sich an den Randbereich des Dichtelements radial nach innen anschließt, vorzugsweise eine Dicke von weniger als der Hälfte der Dicke des Randbereichs, insbesondere weniger als ein Drittel der Dicke des Randbereichs, auf. Die Dichtmembran dient dem Verschließen des Dichtelements im Mittenbereich, so dass das am Einlass unter Druck anstehende Fluid nicht hinter das Dichtelement gelangen und damit ein Herauslösen des Dichtelements aus dem zweiten Ventilelement verursachen kann.

Gemäß einem Ausführungsbeispiel weist das zweite Ventilelement eine stirnseitige, dem ersten Ventilelement zugewandte Ausnehmung auf, in die das Dichtelement formschlüssig einsetzbar ist. Die Ausnehmung weist vorzugsweise einen größeren Durchmesser auf als die im ersten Ventilelement vorgesehene Öffnung, über die das Fluid zugeführt wird. Vorzugsweise ist die Form des Dichtelements, insbesondere die randseitige Form, derart an die Form der Ausnehmung angepasst, dass das Dichtelement in die Ausnehmung eingeschnappt werden kann. Dadurch wird ein sicherer Halt des Dichtelements in der Ausnehmung erreicht.

Gemäß einem Ausführungsbeispiel weitet sich die Ausnehmung in Fließrichtung, d.h. in die Ausnehmung hinein radial auf. Dadurch nimmt beispielsweise der Durchmesser der Ausnehmung in die Ausnehmung hinein zu. Dadurch wird das Dichtelement klemmend in der Ausnehmung fixiert.

Gemäß einem Ausführungsbeispiel weist die Ausnehmung eine in Fließrichtung gemessene Tiefe auf, die kleiner ist als die in Fließrichtung gemessene Dicke des Randbereichs des Dichtelements im geöffneten Zustand des Überdruckventils, d.h. im nicht deformierten Zustand des Dichtelements. Dadurch steht der Randbereich des Dichtelements gegenüber dem Rand der Ausnehmung in Richtung des ersten Ventilelements bzw. des daran gebildeten Ventilsitzes vor, so dass durch diesen Überstand eine Anpressung der Richtung an dem Ventilsitz erreicht werden kann.

Gemäß einem Ausführungsbeispiel weist das erste Ventilelement eine Öffnung auf, die einen Abschnitt des Fluidkanals bildet. Der Mittenbereich des Dichtelements weist einen Durchmesser auf, der gleich oder im Wesentlichen gleich dem Durchmesser der Öffnung des ersten Ventilelements ist. Durch diese Dimensionierung des Mittenbereichs des Dichtelements relativ zur Öffnung im ersten Ventilelement wird erreicht, dass der um den Mittenbereich herum verlaufende Randbereich des Dichtelements im geschlossenen Zustand des Überdruckventils gegenüber einem randseits um die Öffnung herum verlaufenden Ventilsitz zur Anlage gelangt.

Gemäß einem Ausführungsbeispiel weist das zweite Ventilelement einen Anlageabschnitt auf, der im geschlossenen Zustand des Überdruckventils zur Anlage gegenüber dem ersten Ventilelement kommt. Der Anlageabschnitt ist dazu ausgebildet, gegenüber einem am ersten Ventilelement um den Ventilsitz herum verlaufenden Flächenabschnitt zur Anlage zu gelangen. Dadurch wird erreicht, dass die Deformierung des Randbereichs des Dichtelements durch den Anlageabschnitt begrenzt wird, und zwar unabhängig von dem Druck, den die Feder beim Verschließen des Überdruckventils auf das zweite Ventilelement aufbringt. Dies führt wiederum zu einer präzisen und wiederholgenauen Funktion des Überdruckventils.

Gemäß einem Ausführungsbeispiel ist der Anlageabschnitt umfangseitig um das Dichtelement herum vorgesehen. Dadurch wird erreicht, dass der Randbereich des Dichtelement im geschlossenen Zustand des Überdruckventils randseits durch den Anlageabschnitt entlang der gesamten, durch die Deformierung des Randbereichs reduzierten Dicke umschlossen wird, so dass das Dichtelement auch bei hohen Drücken nicht radial ausweichen kann.

Gemäß einem Ausführungsbeispiel ist der Anlageabschnitt im Randbereich der Ausnehmung des zweiten Ventilelements vorgesehen. In anderen Worten verläuft der Anlageabschnitt um die das Dichtelement aufnehmende Ausnehmung herum und bildet vorzugsweise deren umfangsseitige Begrenzung. Dadurch wird eine kompakte Baugröße des zweiten Ventilelements erreicht.

Gemäß einem Ausführungsbeispiel steht der Randbereich des Dichtelements im geöffneten Zustand des Überdruckventils gegenüber dem Anlageabschnitt in Richtung des ersten Ventilelements vor. Dadurch wird erreicht, dass der Randbereich beim Schließen des Überdruckventils zunächst im überstehenden Bereich eine Deformierung erfährt, bevor dann der Anlageabschnitt an dem ersten Ventilelement zur Anlage gelangt und damit die Deformierung des Dichtelements begrenzt wird.

Gemäß einem Ausführungsbeispiel wird der Randbereich des Dichtelements im geschlossenen Zustand des Überdruckventils derart komprimiert, dass der Anlageabschnitt gegenüber dem zweiten Ventilelement anliegt. Dadurch wird eine sichere Abdichtung bei gleichzeitiger Begrenzung der Deformierung des Dichtelements erreicht.

Gemäß einem Ausführungsbeispiel ist das erste Ventilelement ein Schlauchsteckanschluss. Der Schlauchsteckanschluss ist dazu konfiguriert, einen Schlauch, über den das unter Druck stehende Fluid zugeführt wird, aufzunehmen und damit eine fluiddichte Verbindung zwischen dem Schlauch und dem Überdruckventil zu erreichen. Durch die Ausbildung des ersten Ventilelements als Schlauchsteckanschluss wird eine kompakte und bauteilreduzierte Bauweise des Überdruckventils erreicht.

Gemäß einem Ausführungsbeispiel weist das Überdruckventil keine Verstellmechanik auf, mittels der die Vorspannung einer Feder, die auf das zweite Ventilelement wirkt, einstellbar ist. Der Druckschwellwert, ab dem das Überdruckventil öffnet, kann allein durch das hochpräzise Öffnungsverhalten hinreichend genau eingestellt werden.

Alternativ kann das Überdruckventil jedoch auch eine Verstellmechanik aufweisen, mittels der die Vorspannung einer Feder, die auf das zweite Ventilelement wirkt, einstellbar ist. Dadurch kann der Durchschwellwert noch genauer eingestellt werden, ab dem das Überdruckventil geöffnet wird.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft einen Längsschnitt durch ein Überdruckventil im geöffneten Zustand entlang einer Mittellängsachse;
- Fig. 2: beispielhaft einen Längsschnitt durch das als Ventilstößel ausgebildete zweite Ventilelement mit daran vorgesehenem Dichtelement;
- Fig. 3: beispielhaft eine schematische Schnittdarstellung eines ersten und zweiten Ventilelements in einer teilgeöffneten Stellung, bei der das zweite Ventilelement eine Teilbewegung vollzogen hat, das Dichtelement aber noch gegen den Ventilsitz anliegt; und
- Fig. 4: beispielhaft eine schematische Schnittdarstellung eines ersten und zweiten Ventilelements in einer geschlossenen Stellung, bei der das Dichtelement und das zweite Ventilelement mit einem Anlageabschnitt gegenüber dem Ventilsitz anliegen.

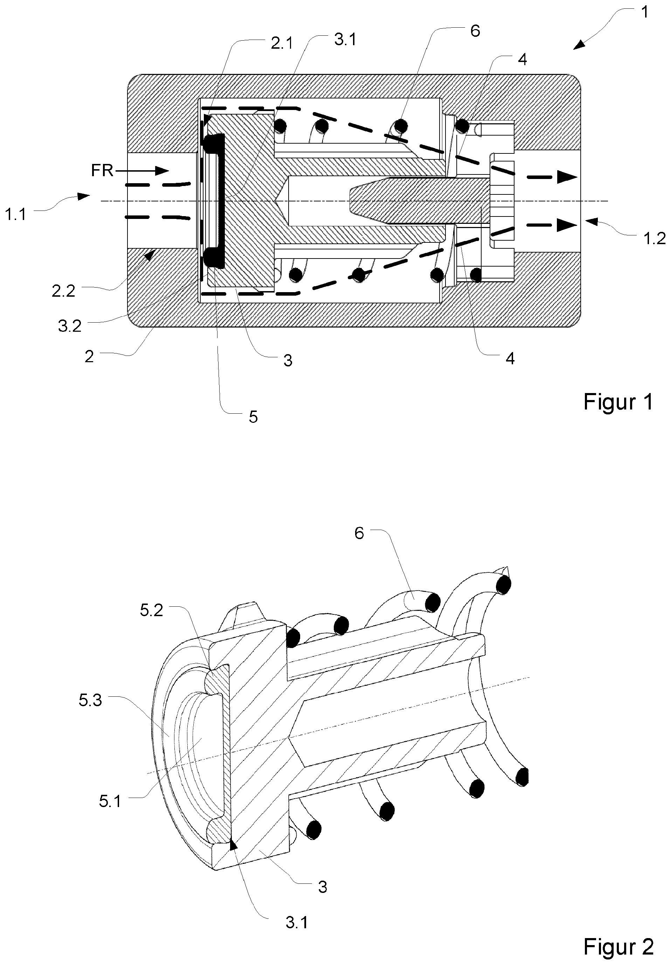

Figur 1 zeigt eine Schnittdarstellung eines Überdruckventils 1 in geöffneter Stellung. Das Überdruckventil 1 umfasst ein erstes Ventilelement 2 und ein zweites Ventilelement 3, das relativ zum ersten Ventilelement verschiebbar ist, um das Überdruckventil 1 von einem geschlossenen Zustand in einen geöffneten Zustand überführen zu können. Das Überdruckventil 1 ist dazu ausgebildet, bei Anliegen eines Fluiddrucks oberhalb eines vorgegebenen oder einstellbaren Druckschwellwerts zu öffnen, um beispielsweise Fluidüberdrücke in einem Fluidsystem zu vermeiden. Hierzu ist in dem Überdruckventil ein Fluidkanal 4 vorgesehen, durch den - bei geöffnetem Überdruckventil - ein Fluid in einer Fließrichtung FR von einem Einlass 1.1 zu einem Auslass 1.2 fließen kann, wie dies in Fig. 1 durch die strichlierten Pfeile angedeutet ist.

Im gezeigten Ausführungsbeispiel ist das erste Ventilelement 2 durch ein Gehäuse des Überdruckventils 1 gebildet. Alternativ kann das erste Ventilelement 2 aber auch durch ein separates Element gebildet werden, das in ein Gehäuse des Überdruckventils 1 eingesetzt ist. Beispielsweise kann das erste Ventilelement 2 auch als Schlauchsteckanschluss ausgebildet sein, um eine Verbindung mit einem Schlauch zu ermöglichen, über den ein Fluid dem Überdruckventil 1 zugeführt wird.

Das zweite Ventilelement 3 ist als Ventilstößel ausgebildet. Es ist in Fluidrichtung FR verschiebbar im Gehäuse des Überdruckventils 1 angeordnet, so dass das Überdruckventil 1 je nach Lage des zweiten Ventilelements 3 den geöffneten bzw. den geschlossenen Zustand einnimmt. Das zweite Ventilelement 3 ist dabei federbelastet, und zwar derart, dass dieses bei Anliegen eines Fluiddrucks unterhalb des Druckschwellwerts durch eine Feder 6 an einen am ersten Ventilelement 2 vorgesehenen Ventilsitz 2.1 angepresst wird und damit das Überdruckventil 1 geschlossen ist. Wenn der am Einlass 1.1 anliegende Fluiddruck den Druckschwellwert übersteigt, wird das zweite Ventilelement 3 entgegen der Federkraft der Feder 6 vom Ventilsitz 2.1 abgehoben und dadurch das Überdruckventil 1 geöffnet.

Um den Fluidkanal 4 im geschlossenen Zustand des Überdruckventils 1 an der Schnittstelle zwischen dem ersten und zweiten Ventilelement 2, 3 fluiddicht abzudichten, ist ein Dichtelement 5 vorgesehen.

Das Dichtelement 5 ist als flächiges Dichtelement ausgebildet. Beispielsweise weist das Dichtelement 5 eine runde, insbesondere kreisrunde Grundfläche auf. Wie in Fig. 1 und 2 ersichtlich, ist das Dichtelement 5 in eine Ausnehmung 3.1 des zweiten Ventilelements 3 eingesetzt, die dem ersten Ventilelement 2 bzw. der im ersten Ventilelement 2 vorgesehenen Öffnung 2.2, über die das Fluid in das Überdruckventil 1 einströmt, zugewandt ist. Das Dichtelement 5 und/oder die Ausnehmung 3.1 ist randseitig vorzugsweise derart ausgebildet, dass das Dichtelement 5 formschlüssig in der Ausnehmung 3.1 gehalten wird. Beispielsweise können das Dichtelement 5 und die Ausnehmung 3.1 derart zueinander ausgebildet sein, dass das Dichtelement 5 in der Ausnehmung 3.1 einschnappt. Beispielsweise weist die Ausnehmung 3.1 einen Durchmesser auf, der sich in Fließrichtung FR aufweitet. Dementsprechend weist das Dichtelement 5 beispielsweise einen Außendurchmesser auf, der sich ebenfalls in Fließrichtung FR gesehen, d.h. in Richtung des Bodenabschnitts des Dichtelements 5 aufweitet. Es versteht sich, dass auch andere Geometrien einer formschlüssigen Verbindung zwischen der Ausnehmung 3.1 des zweiten Ventilelements 3 und dem Dichtelement 5 denkbar sind.

Das Dichtelement 5 weist einen Mittenbereich 5.1 und einen Randbereich 5.2 auf. Der Mittenbereich 5.1 weist vorzugsweise zumindest im Übergangsbereich zwischen dem Randbereich 5.2 und dem Mittenbereich 5.1 eine in Fließrichtung gemessene Dicke auf, die kleiner ist als die in Fließrichtung FR gemessene Dicke D des Randbereichs 5.2. Vorzugsweise weist der Mittenbereich 5.1 zumindest im Übergangsbereich zwischen dem Randbereich 5.2 und dem Mittenbereich 5.1 eine Dicke auf die halb so groß oder weniger als halb so groß ist wie die Dicke des Randbereichs 5.2. Insbesondere weist der Randbereich 5.2 eine in Fließrichtung FR gemessene Dicke D auf, die mindestens dreimal so groß ist wie die Dicke im Mittenbereich 5.1 bzw. in dem vorgenannten Übergangsbereich zwischen dem Randbereich 5.2 und dem Mittenbereich 5.1. Dadurch wird erreicht, dass das Material des Randbereichs 5.2 beim Anpressen des Dichtelements 5 an den Ventilsitz 2.1 radial nach innen in den Bereich ausweichen kann, in dem das Dichtelement 5 dünner ausgebildet ist.

Vorzugsweise ist der Mittenbereich 5.1 als Dichtmembran ausgebildet, die randseitig mit einem wulstartig ausgebildeten Randbereich verbunden ist. Dadurch kann verhindert werden, dass das unter Druck stehende Fluid das Dichtelement 5 hinterfließt und dabei das Dichtelement 5 aus der Ausnehmung 3.1 in unerwünschter Weise herauslöst.

Der Randbereich 5.2 des Dichtelements 5 ist wulstartig ausgebildet und bildet oberseitig eine Dichtfläche 5.3 aus, die bei geschlossenem Überdruckventil 1 gegenüber dem ersten Ventilelement 2 zur Anlage gelangt. Diese Dichtfläche 5.3 ist vorzugsweise konvex gewölbt ausgebildet, insbesondere im Querschnitt halbrund oder im Wesentlichen halbrund. Dadurch wird eine Dichtfläche 5.3 geschaffen, die die Oberflächenkontur eines Dichtrings, insbesondere eines O-Rings hat. Dies bietet Vorteile hinsichtlich einer definierten Deformierbarkeit des Randbereichs 5.2 bei Anlage gegenüber dem Ventilsitz 2.1. Alternativ sind auch andere Querschnittsformen denkbar, beispielsweise keilförmige, trapezförmige oder quadratische Querschnittsformen.

Das Dichtelement 5 ist an der dem ersten Ventilelement 2 abgewandten Unterseite, die gegenüber dem Boden der Ausnehmung 3.1 zu Anlage gelangt, eben oder im Wesentlichen eben ausgebildet.

Die Tiefe t der Ausnehmung 3.1 (gemessen in Fließrichtung FR) ist vorzugsweise kleiner ausgebildet als die Dicke D des Dichtelements 5 im Randbereich 5.2 des Dichtelements 5. Damit steht der Randbereich 5.2 des Dichtelements 5 gegenüber einem Anlageabschnitt 3.2 des zweiten Ventilelements 3 in Richtung des ersten Ventilelements 2 vor.

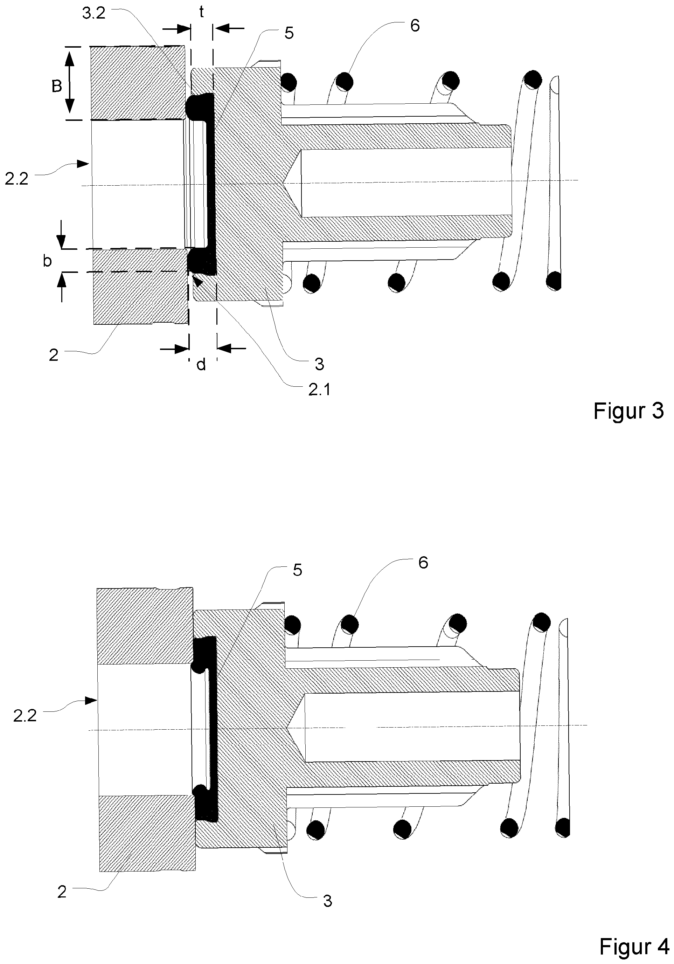

Wie in Fig. 3 und 4 zu erkennen, dient der Anlageabschnitt 3.2 dazu, eine kontrollierte Anpressung des Dichtelements 5, insbesondere der Randbereichs 5.2 des Dichtelements 5 am Ventilsitz zu erreichen.

Ausgehend von dem geöffneten Überdruckventil 1, das in Fig. 1 gezeigt ist, gelangt bei der Schließbewegung des zweiten Ventilelements 3 zunächst der Randbereich 5.2 des Dichtelements 5 zur Anlage gegenüber dem Ventilsitz 2.1. Die Federkraft der Feder 6 ist jedoch vorzugsweise derart gewählt, dass das zweite Ventilelement 3 danach noch weiter auf das erste Ventilelement 2 zubewegt wird, so dass der Randbereich 5.2 des Dichtelements 5 elastisch verformt wird. Diese Bewegung bzw. Verformung wird vorzugsweise dadurch begrenzt, dass der Anlageabschnitt 3.2 des zweiten Ventilelements 3 gegenüber dem ersten Ventilelement 2 zur Anlage gelangt. Durch die im Dichtelement 5 vorhandene mittige Aussparung, die sich aufgrund des Dickenunterschieds zwischen dem Mittenbereich 5.1 und dem Randbereich 5.2 ergibt, kann das Material des Randbereichs 5.2 bei dessen Deformierung radial nach innen ausweichen, wie dies in Fig. 4 dargestellt ist. Die Deformierung des Dichtelements 5 ist jedoch derart gewählt, dass diese reversibel ist, d.h. beim Öffnen des Überdruckventils 1 verformt sich das Dichtelement 5 in seine ursprüngliche Form zurück. Dadurch wird erreicht, dass das Überdruckventil 1 stets bei gleichen oder im Wesentlichen gleichen Druckschwellwerten mit einem definierten Öffnungsverhalten öffnet.

Vorzugsweise ist der Ventilsitz 2.1 am ersten Ventilelement derart breit ausgebildet, dass dieser eine flächige Anlage des Randbereichs 5.2 des Dichtelements 5 auch im komprimierten Zustand ermöglicht. Vorzugsweise weist der Ventilsitz 2.1 eine Breite B derart auf, dass diese gleich oder größer als die radiale Breite b des Randabschnitts 5.2 ist. Vorzugsweise ist die Breite B des Ventilsitzes 2.1 derart gewählt, dass dieser zugleich als Anlagefläche für den Anlageabschnitt 3.2 des zweiten Ventilelements 3 dient (s. Fig. 4). Vorzugsweise liegen der Ventilsitz 2.1 und die Anlagefläche in einer gemeinsamen Ebene.

Wie insbesondere in Fig. 1 zu erkennen, ist der Mittenbereich 5.1 der Dichtung 5 mit dessen Größe und Form derart gewählt, dass dieser deckungsgleich oder im Wesentlichen deckungsgleich der Öffnung 2.2 gegenüberliegt. In anderen Worten ist die Größe der Öffnung 2.2 im Wesentlichen gleich zur Größe des Mittenbereichs 5.1 gewählt. Dadurch wird erreicht, dass der Randbereich 5.2 der Dichtung 5 im geschlossenen Zustand des Überdruckventils um den Rand der Öffnung 2.2 herum verläuft und die Dichtfläche 5.3 des Dichtelements 5 gegenüber dem um diese Öffnung 2.2 herum verlaufenden Ventilsitz 2.1 zur Anlage kommt.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Überdruckventil
- 1.1: Einlass
- 1.2: Auslass
- 2: erstes Ventilelement
- 2.1: Ventilsitz
- 2.2: Öffnung
- 3: zweites Ventilelement
- 3.1: Ausnehmung
- 3.2: Anlageabschnitt
- 4: Fluidkanal
- 5: Dichtelement
- 5.1: Mittenbereich
- 5.2: Randbereich
- 5.3: Dichtfläche
- 6: Feder

- B: Breite des Ventilsitzes
- b: Breite des Randbereichs
- D: Dicke
- FR: Fließrichtung
- t: Tiefe

## Patentansprüche

1. Überdruckventil umfassend ein erstes Ventilelement (2), das einen Ventilsitz (2.1) ausbildet und ein zweites Ventilelement (3), das relativ zum ersten Ventilelement (2) bewegbar ist, wobei in dem Überdruckventil ein Fluidkanal (4) mit einer Fließrichtung (FR) ausgebildet ist, wobei das zweite Ventilelement (3) in Fließrichtung (FR) verschiebbar ist, wobei das zweite Ventilelement (3) federbelastet gegen den am ersten Ventilelement (2) ausgebildeten Ventilsitz (2.1) anpressbar ist, um das Überdruckventil zu schließen und bei Übersteigen eines Druckschwellwerts in Fließrichtung (FR) von dem Ventilsitz (2.1) abhebbar ist und wobei an dem zweiten Ventilelement (3) ein Dichteelement (5) vorgesehen ist, **dadurch gekennzeichnet, dass** das Dichtelement (5) ein flächiges Element ist, das einen Mittenbereich (5.1) und einen Randbereich (5.2) aufweist, dass das Dichtelement (5) im Randbereich (5.2) eine größere, in Fließrichtung (FR) gemessene Dicke (D) aufweist als zumindest der an den Randbereich (5.2) angrenzende äußere Abschnitt des Mittenbereichs (5.1), dass der Randbereich (5.2) des Dichtelements (5) an der dem ersten Ventilelement (2) zugewandten Seite zumindest gegenüber dem äußeren Abschnitt des Mittenbereichs (5.1) vorsteht und im geschlossenen Zustand des Überdruckventils gegenüber dem ersten Ventilelement (2) anliegt.

2. Überdruckventil nach Anspruch 1, **dadurch gekennzeichnet, dass** das erste Ventilelement (2) einen ringförmigen planaren Ventilsitz (2.1) ausbildet und dass die in radialer Richtung gemessene Breite (B) des planaren Ventilsitzes (2.1) zumindest so breit ist wie die in radialer Richtung gemessene Breite (b) des Randbereichs (5.2) des Dichtelements (5).

3. Überdruckventil nach Anspruch 1 oder 2, **dadurch gekennzeichnet, dass** der Randbereich (5.2) des Dichtelements (5) ringförmig ausgebildet ist und an der dem Ventilsitz (2.1) zugewandten Seite eine konvex gewölbte Dichtfläche ausbildet.

4. Überdruckventil nach einem der vorhergehenden Ansprüche, **dadurch gekennzeichnet, dass** der Mittenbereich (5.1) des Dichtelements (5) als Dichtmembran ausgebildet ist und zusammen mit dem Randbereich (5.2) ein geschlossenes, einstückig ausgebildetes Dichtelement ausbildet.

5. Überdruckventil nach einem der vorhergehenden Ansprüche, **dadurch gekennzeichnet, dass** das zweite Ventilelement (3) eine stirnseitige, dem ersten Ventilelement (2) zugewandte Ausnehmung (3.1) aufweist, in die das Dichtelement (5) formschlüssig einsetzbar ist.

6. Überdruckventil nach Anspruch 5, **dadurch gekennzeichnet, dass** sich die Ausnehmung (3.1) in Fließrichtung (FR) radial aufweitet.

7. Überdruckventil nach Anspruch 5 oder 6, **dadurch gekennzeichnet, dass** die Ausnehmung (3.1) eine in Fließrichtung (FR) gemessene Tiefe (t) aufweist, die kleiner ist als die in Fließrichtung gemessene Dicke (D) des Randbereichs (5.2) des Dichtelements (5) im geöffneten Zustand des Überdruckventils.

8. Überdruckventil nach einem der vorhergehenden Ansprüche, **dadurch gekennzeichnet, dass** das erste Ventilelement (2) eine Öffnung (2.2) aufweist, die einen Abschnitt des Fluidkanals (4) bildet und dass der Mittenbereich (5.1) des Dichtelements (5) einen Durchmesser aufweist, der gleich oder im Wesentlichen gleich dem Durchmesser der Öffnung (2.2) des ersten Ventilelements (2) ist.

9. Überdruckventil nach einem der vorhergehenden Ansprüche, **dadurch gekennzeichnet, dass** das zweite Ventilelement (3) einen Anlageabschnitt (3.2) aufweist, der im geschlossenen Zustand des Überdruckventils zur Anlage gegenüber dem ersten Ventilelement (2) kommt.

10. Überdruckventil nach Anspruch 9, **dadurch gekennzeichnet, dass** der Anlageabschnitt (3.2) umfangseitig um das Dichtelement (5) herum vorgesehen ist.

11. Überdruckventil nach Anspruch 9 oder 10, **dadurch gekennzeichnet, dass** der Anlageabschnitt (3.2) im Randbereich der Ausnehmung des zweiten Ventilelements (3) vorgesehen ist.

12. Überdruckventil nach einem der Ansprüche 9 bis 11, **dadurch gekennzeichnet, dass** im geöffneten Zustand des Überdruckventils der Randbereich (5.2) des Dichtelements gegenüber dem Anlageabschnitt (3.2) in Richtung des ersten Ventilelements (2) vorsteht.

13. Überdruckventil nach einem der Ansprüche 9 bis 12, **dadurch gekennzeichnet, dass** im geschlossenen Zustand des Überdruckventils der Randbereich des Dichtelements (5) derart komprimiert wird, dass der Anlageabschnitt (3.2) gegenüber dem zweiten Ventilelement (2) anliegt.

14. Überdruckventil nach einem der vorhergehenden Ansprüche, **dadurch gekennzeichnet, dass** das erste Ventilelement (2) ein Schlauchsteckanschluss ist.

15. Überdruckventil nach einem der vorhergehenden Ansprüche, **dadurch gekennzeichnet, dass** das Überdruckventil keine Verstellmechanik aufweist, mittels der die Vorspannung einer Feder (6), die auf das zweite Ventilelement (2) wirkt, einstellbar ist.
